# EUROPÄISCHE PATENTANMELDUNG

(11) **EP 3 128 384 A1**
(43) Veröffentlichungstag der Anmeldung: **08.02.2017**
(21) Anmeldenummer: 16178109.1
(22) Anmeldetag: 06.07.2016
(51) Int. Cl.: G05B 19/042, F24C 7/00

(54) **VERFAHREN UND VORRICHTUNG ZUM UNTERSTÜTZEN EINES PROZESSABLAUFS SOWIE HAUSHALTSGERÄT**

(30) Priorität: 05.08.2015 DE 102015112865
(71) Anmelder: Miele & Cie. KG, 33332 Gütersloh (DE)
(72) Erfinder: Stahl, Matthias, 33813 Oerlinghausen (DE); Rüther, Stefan, 33613 Bielefeld (DE)

(57) **Zusammenfassung**

Die Erfindung betrifft ein Verfahren zum Unterstützen eines Prozessablaufs mit zumindest einem ersten Prozess und einem unter Verwendung von zumindest einer Haushaltseinrichtung (205, 210, 215, 220) eines Haushaltsgeräts ausführbaren zweiten Prozess, wobei der erste Prozess zumindest einen über einen idealen ersten Prozessparameter (245) definierten ersten Prozessteilschritt aufweist und der zweite Prozess über zumindest einen idealen zweiten Prozessparameter definiert ist. Das Verfahren umfasst einen Schritt des Einlesens eines dem ersten Prozessteilschritt zugeordneten realen ersten Prozessparameters, einen Schritt des Durchführens eines Vergleichs des realen ersten Prozessparameters mit dem idealen ersten Prozessparameter (245) und einen Schritt des Bereitstellens eines Änderungsparameters (280, 285, 290, 295) zum Ändern des idealen zweiten Prozessparameters unter Verwendung eines Ergebnisses des Vergleichs in einen zur weiteren Ausführung des zweiten Prozesses zu verwendenden geänderten zweiten Prozessparameter.

## Beschreibung

Die Erfindung betrifft ein Verfahren zum Unterstützen eines Prozessablaufs, eine Vorrichtung zum Unterstützen eines Prozessablaufs sowie ein Haushaltsgerät.

Heutige Automatikprogramme in Haushaltsgeräten sind beispielsweise auf das Garen eines einzelnen Lebensmittels bzw. eines Gerichts oder Teilgerichts spezialisiert. Der fortschreitende Kochprozess erfordert dabei die kontinuierliche Übertragung von Steuerbefehlen und Kontextinformationen vom Rezept und dessen Zubereitung auf ein oder mehrere Kochgeräte.

Insbesondere komplexere Menüs oder Gerichte, die mehrere Kochgeräte und parallele Kochprozesse erfordern, werden nach wie vor durch den Nutzer zeitlich und im Ablauf manuell koordiniert. Die Geräte werden dabei durch den Nutzer gesteuert. Bereits der Kochprozess eines einfachen Menüs mit Haupt- und Nachspeise erfordert also einiges an Erfahrung, um die Zutaten mit allen Beilagen auf den Punkt genau fertig zu garen.

Bei Abweichungen vom Idealprozess, z. B. Überkochen, Anbrennen, etc., reagiert ein durchschnittlich erfahrener Koch meist gestresst, was sich oft negativ auf das Gelingen der danach folgenden Prozessschritte auswirkt. Zudem führen Zeitdruck oder mangelnde Erfahrung beim Kochen zu weniger guten Ergebnissen, insbesondere bei komplexeren Gerichten.

Die EP 1 843 231 B1 zeigt eine Bedien- und Anzeigevorrichtung für ein Haushaltgerät. Die Bedien- und Anzeigevorrichtung ist geeignet, Zustände und/oder Einstellungen von weiteren, mit dem Haushaltgerät in Kommunikationsverbindung stehenden, Haushaltgeräten anzuzeigen.

Der Erfindung liegt die Aufgabe zugrunde, ein verbessertes Verfahren zum Unterstützen eines Prozessablaufs, eine verbesserte Vorrichtung zum Unterstützen eines Prozessablaufs sowie ein verbessertes Haushaltsgerät zu schaffen.

Erfindungsgemäß wird diese Aufgabe durch ein Verfahren zum Unterstützen eines Prozessablaufs, eine Vorrichtung zum Unterstützen eines Prozessablaufs sowie ein Haushaltsgerät mit den Merkmalen der Hauptansprüche gelöst. Vorteilhafte Ausgestaltungen und Weiterbildungen der Erfindung ergeben sich aus den nachfolgenden Unteransprüchen.

Ein Verfahren zum Unterstützen eines Prozessablaufs in einem Haushaltsgerät führt einen Vergleich eines realen ersten Prozessparameters mit einem idealen ersten Prozessparameter eines ersten Prozesses des Prozessablaufs durch, um abhängig von einem Ergebnis des Vergleichs einen zweiten Prozess des Prozessablaufs zu ändern bzw. anzupassen. Beispielsweise können die Prozesse in verschiedenen Funktionsbereichen eines Gargeräts oder in mehreren Gargeräten ausgeführt werden.

Gemäß dem hier vorgestellten Konzept können beispielsweise Automatikprogramme zur Speisenzubereitung mit anderen Kochgeräten und parallelen Kochprozessen koordiniert werden. Insbesondere können Unterbrechungen oder Anpassungen während des Garens oder die Garzeit unterbrechende Zubereitungshandlungen wie Dekorieren oder Nachwürzen im Gesamtkochprozess berücksichtigt werden. Das Konzept kann im Zusammenhang mit Verfahren zum Anpassen der Startzeiten von Gargeräten eingesetzt werden, wenn mit mehreren Gargeräten beispielsweise ein gemeinsames Garende erreicht werden soll.

Das vorgestellte Konzept ermöglicht auch unerfahrenen Nutzern eines Haushaltgeräts die Erzielung zufriedenstellender Ergebnisse. Beispielsweise können in einer Weiterbildung des vorgeschlagenen Ansatzes Kochanfänger mithilfe einer Schritt-für-Schritt-Anleitung auf einem zentralen User-Interface Garprozesse eines komplexeren Menüs steuern und so ohne Weiteres zu einem perfekten Ergebnis kommen. Kochprofis wiederum können sich auf die automatische Koordinierung der Prozesse verlassen, um über mehr Zeit für die kreativen Tätigkeiten im Kochprozess zu verfügen.

Ein Verfahren zum Unterstützen eines Prozessablaufs mit zumindest einem ersten Prozess und einem unter Verwendung von zumindest einer Haushaltseinrichtung eines Haushaltsgeräts ausführbaren zweiten Prozess, wobei der erste Prozess zumindest einen über einen idealen ersten Prozessparameter definierten ersten Prozessteilschritt aufweist und der zweite Prozess über zumindest einen idealen zweiten Prozessparameter definiert ist, umfasst die folgenden Schritte:
Einlesen eines dem ersten Prozessteilschritt zugeordneten realen ersten Prozessparameters;
Durchführen eines Vergleichs des realen ersten Prozessparameters mit dem idealen ersten Prozessparameter; und
Bereitstellen eines Änderungsparameters zum Ändern des idealen zweiten Prozessparameters unter Verwendung eines Ergebnisses des Vergleichs in einen zur weiteren Ausführung des zweiten Prozesses zu verwendenden geänderten zweiten Prozessparameter.

Das Verfahren kann in einer einem Haushaltsgerät oder mehreren Haushaltsgeräten zugeordneten Vorrichtung ausgeführt werden. Die Haushaltseinrichtung kann einen Teilbereich des Haushaltsgeräts oder eines der Haushaltsgeräte bezeichnen, der zur Ausführung des zweiten Prozesses ausgebildet ist. Das oder die Haushaltsgeräte bzw. die Haushaltseinrichtung können der Zubereitung von Speisen dienen. So kann es sich bei einem Haushaltsgerät um einen Herd handeln, der als die Haushaltseinrichtung eine Kochplatte oder ein Kochfeld aufweist. Entsprechend kann der Prozessablauf als ein Garprozess verstanden werden, dessen einzelne Prozesse zum Bereiten eines oder mehrerer Gerichte bzw. Speisen dienen. Unter den Prozessparametern können den Garprozess beeinflussende Größen wie Temperatur, Zeit, Aggregatszustände von Lebensmitteln, etc., verstanden werden. Die idealen Prozessparameter können dabei einem perfekten Gelingen einer Speise zugrunde liegen, beispielsweise genau den Rezeptvorgaben für das Zubereiten der Speise entsprechen, während die realen Prozessparameter ein mehr oder weniger großes Abweichen von den Rezeptvorgaben repräsentieren können.

Gemäß einer Ausführungsform des Verfahrens kann in dem Schritt des Einlesens der den ersten Prozessteilschritt definierende ideale erste Prozessparameter über eine Schnittstelle mit einer Datenbank, in der die die Prozesse des Prozessablaufs definierenden idealen Prozessparameter hinterlegt sind, eingelesen werden. Vorteilhafterweise kann so schnell auf den idealen ersten Prozessparameter zugegriffen werden.

Gemäß einer weiteren Ausführungsform kann ansprechend auf den Schritt des Bereitstellens der geänderte zweite Prozessparameter eine Beschleunigung oder eine Verlangsamung des zweiten Prozesses bewirken, um ein zeitliches Ende des zweiten Prozesses an ein in Abhängigkeit von dem realen ersten Prozessparameter verändertes zeitliches Ende des ersten Prozessteilschritts anzupassen. Damit kann ohne Weiteres eine Koordinierung der zwei Prozesse erreicht werden, um ein nachteiliges Endergebnis des gesamten Prozessablaufs zu vermeiden.

Beispielsweise kann der erste Prozess einen von einem Nutzer der Haushaltseinrichtung ausgeführten Prozess repräsentieren.

In diesem Zusammenhang kann das Verfahren einen Schritt des Bestimmens des realen ersten Prozessparameters mittels eines optischen Sensors zur Erfassung eines Zustands des Nutzers der Haushaltseinrichtung aufweisen. Mit dieser Ausführungsform kann der erste Prozess bzw. dessen Abweichung von einem idealen Ablauf schnell und unmissverständlich beurteilt und eingeordnet werden.

Alternativ kann der erste Prozess von einer weiteren Haushaltseinrichtung ausgeführt werden.

In diesem Zusammenhang kann das Verfahren einen Schritt des Bestimmens des realen ersten Prozessparameters mittels eines Sensors zur Erfassung eines Zustands der Haushaltseinrichtung aufweisen. Auch so kann der erste Prozess bzw. dessen Abweichung von einem idealen Ablauf schnell und unmissverständlich beurteilt und eingeordnet werden.

Das Verfahren kann ferner einen Schritt des Bereitstellens einer von dem geänderten zweiten Prozessparameter abhängigen Mitteilung über eine Qualität eines Ergebnisses des Prozessablaufs an eine Schnittstelle mit einer einem Nutzer der Haushaltseinrichtung zugeordneten oder zuordenbaren Datenverarbeitungseinrichtung aufweisen. Mit dieser Ausführungsform kann der Nutzer vorteilhafterweise so zeitnah über ein zu erwartendes Ergebnis des Prozessablaufs informiert werden, dass er eventuell Ausweichmaßnahmen ergreifen kann.

Gemäß einer weiteren Ausführungsform kann das Verfahren einen Schritt des Bereitstellens einer von dem Ergebnis des Vergleichs abhängigen Anweisung über eine Beschleunigung oder Verlangsamung des ersten Prozessteilschrittes, um eine Wiederherstellung der Übereinstimmung des idealen ersten Prozessparameters mit dem realen ersten Prozessparameter zu erzielen, aufweisen. Die Anweisung kann beispielsweise an eine Schnittstelle mit einer einem Nutzer der Haushaltseinrichtungen zugeordneten oder zuordenbaren Datenverarbeitungseinrichtung bereitgestellt werden. So kann der Nutzer zur eventuellen Verbesserung des Endergebnisses des Prozessablaufs zeitsparend und stressreduzierend konkret angeleitet werden.

Das Verfahren kann ferner einen Schritt des Durchführens eines weiteren Vergleichs des realen ersten Prozessparameters mit einem idealen dritten Prozessparameter, der einen dritten Prozess des Prozessablaufs definiert, und einem Schritt des Bereitstellens eines weiteren Änderungsparameters zum Ändern des idealen dritten Prozessparameters unter Verwendung eines Ergebnisses des weiteren Vergleichs in einen zur weiteren Ausführung des dritten Prozesses zu verwendenden geänderten dritten Prozessparameter aufweisen. Mit dieser Ausführungsform können vorteilhafterweise auch komplexere Prozessabläufe überwacht und koordiniert werden.

Eine Vorrichtung zum Unterstützen eines Prozessablaufs mit zumindest einem ersten Prozess und einem unter Verwendung von zumindest einer Haushaltseinrichtung eines Haushaltsgeräts ausführbaren zweiten Prozess, wobei der erste Prozess zumindest einen über einen idealen ersten Prozessparameter definierten ersten Prozessteilschritt aufweist und der zweite Prozess über zumindest einen idealen zweiten Prozessparameter definiert ist, weist die folgenden Merkmale auf:
eine Einleseeinrichtung zum Einlesen eines dem ersten Prozessteilschritt zugeordneten realen ersten Prozessparameters;
eine Durchführeinrichtung zum Durchführen eines Vergleichs des realen ersten Prozessparameters mit dem idealen ersten Prozessparameter; und
eine Bereitstellungseinrichtung zum Bereitstellen eines Änderungsparameters zum Ändern des idealen zweiten Prozessparameters unter Verwendung eines Ergebnisses des Vergleichs in einen zur weiteren Ausführung des zweiten Prozesses zu verwendenden geänderten zweiten Prozessparameter.

Die Vorrichtung kann ausgebildet sein, um Ausführungsformen des oben erläuterten Verfahrens auszuführen. Es kann sich bei der Vorrichtung um ein Steuergerät des Haushaltsgeräts oder ein mit einem Steuergerät des Haushaltsgeräts gekoppeltes weiteres Gerät handeln.

Ein Haushaltsgerät weist die folgenden Merkmale auf:
eine Vorrichtung wie oben aufgeführt; und
zumindest eine Haushaltseinrichtung, die mit der Vorrichtung für eine Datenübertragung gekoppelt oder koppelbar ist, wobei die Haushaltseinrichtung für eine Zubereitung von Speisen ausgelegt ist.

Beispielsweise kann es sich bei dem Haushaltsgerät um einen Herd, ein Kochfeld, einen Backofen oder einen Dampfgarer handeln.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele der Erfindung sind in den Zeichnungen rein schematisch dargestellt und werden nachfolgend näher beschrieben. Es zeigt
- Figur 1: eine schematische Darstellung eines Haushalts mit einem Haushaltsgerät gemäß einem Ausführungsbeispiel der vorliegenden Erfindung;
- Figur 2: eine schematische Darstellung einer mit Haushaltsgeräten vernetzen Vorrichtung zum Unterstützen eines Prozessablaufs der Haushaltsgeräte gemäß einem Ausführungsbeispiel der vorliegenden Erfindung;
- Figur 3: ein Zeitdiagramm eines Prozessablaufs gemäß einem Ausführungsbeispiel der vorliegenden Erfindung; und
- Figur 4: ein Ablaufdiagramm eines Verfahrens zum Unterstützen eines Prozessablaufs gemäß einem Ausführungsbeispiel der vorliegenden Erfindung.

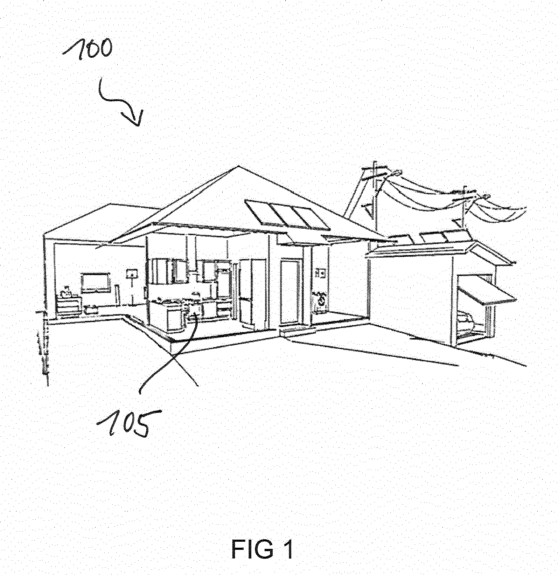

Figur 1 zeigt eine schematische Darstellung eines Gebäudes 100, hier eines Privatgebäudes, mit einem Haushalt, der mehrere Haushaltsgeräte aufweist. Beispielhaft ist ein Haushaltsgerät 105 des Haushalts, hier ein Herd 105, in der Darstellung mit einem Bezugszeichen gekennzeichnet. Mit dem hier vorgestellten Konzept werden mehrere Haushaltseinrichtungen der Haushaltsgeräte und/oder die Handlungen eines Nutzers der Haushaltsgeräte mit zumindest einer der Haushaltseinrichtungen der Haushaltsgeräte zeitlich koordiniert. Auf diese Weise wird ein Prozessablauf der Haushaltseinrichtungen optimal gestaltet. Die Haushaltseinrichtungen können dabei einem einzigen Haushaltsgerät zugeordnet oder auf mehrere Haushaltsgeräte verteilt sein. Beispielhaft wird gemäß dem hier vorgestellten Konzept ein Garprozess zur Zubereitung von Speisen innerhalb des Herdes 105 koordiniert.

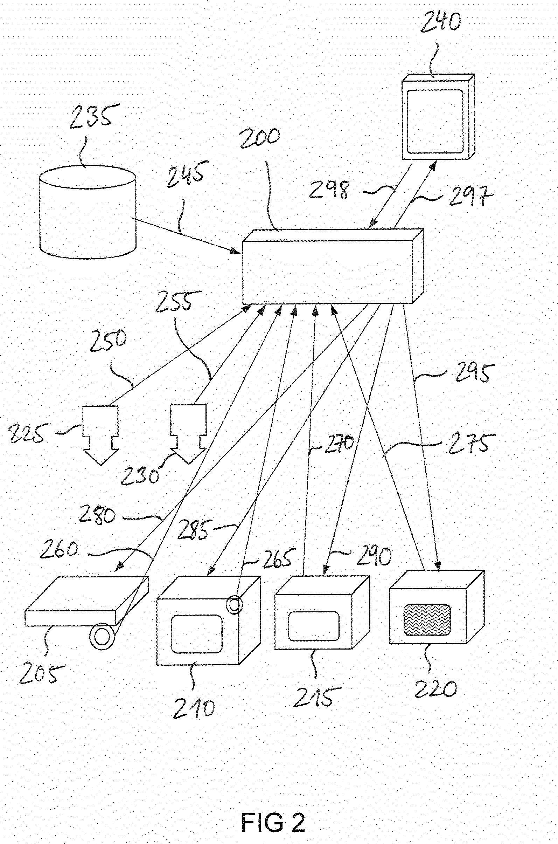

Figur 2 zeigt eine schematische Darstellung eines Haushaltsnetzwerks mit einer Vorrichtung 200 und verschiedenen Haushaltseinrichtungen, die über geeignete Schnittstellen mit der Vorrichtung 200 vernetzt sind. Bei dem in Figur 2 gezeigten Ausführungsbeispiel dienen die Haushaltseinrichtungen der Speisenzubereitung. Beispielhaft bildet ein Kochfeld eine erste Haushaltseinrichtung 205, ein Backofen eine zweite Haushaltseinrichtung 210, ein Dampfgarer eine dritte Haushaltseinrichtung 215 und ein Mikrowellenherd eine vierte Haushaltseinrichtung 220.

Teil des in Figur 2 gezeigten beispielhaften Haushaltsnetzwerks sind ferner ein erster optischer Sensor 225, ein zweiter optischer Sensor 230, eine Rezeptdatenbank 235 und eine einem Nutzer der Haushaltseinrichtungen 205, 210, 215, 220 zugeordnete Datenverarbeitungseinrichtung 240, hier ein Tablet-Computer.

Die Datenverarbeitungseinrichtung 240 kann bei dem in Figur 2 gezeigten Haushaltsnetzwerk als ein zentrales User-Interface für den Nutzer der Haushaltseinrichtungen 205, 210, 215, 220 eingesetzt werden, d. h., es können über die Datenverarbeitungseinrichtung 240 Anweisungen an den Nutzer bereitgestellt werden, und der Nutzer kann über Eingaben an der Datenverarbeitungseinrichtung 240 einzelne Prozesse eines in den Haushaltseinrichtungen 205, 210, 215, 220 ausgeführten Prozessablaufs nach eigenem Wunsch steuern. Die Datenverarbeitungseinrichtung 240 kann alternativ auch eine Projektionsfläche im Arbeitsumfeld des Nutzers aufweisen, an der Anweisungen oder Informationen gut lesbar projiziert werden.

Die Haushaltseinrichtungen 205, 210, 215, 220 können einem einzigen Haushaltsgerät oder mehreren Haushaltsgeräten zur Speisenzubereitung zugeordnet sein. Die Haushaltseinrichtungen 205, 210, 215, 220 sowie die optischen Sensoren 225, 230, die Rezeptdatenbank 235 und die Datenverarbeitungseinrichtung 240 stehen für eine Datenübertragung mit der Vorrichtung 200 in Kommunikationsverbindung. Die Kommunikationsverbindung kann drahtgebunden oder drahtlos gestaltet sein. Bei der Vorrichtung 200 handelt es sich gemäß einem Ausführungsbeispiel um ein zentrales Steuergerät des Haushaltsnetzwerks. Alternativ kann die Vorrichtung 200 beispielsweise in ein Haushaltsgerät, dass eine oder alle der der Haushaltseinrichtungen 205, 210, 215, 220 umfasst, integriert sein.

Ein in zumindest einer der Haushaltseinrichtungen 205, 210, 215, 220 ausgeführter Prozessablauf wird zur Herstellung einer oder mehrerer Speisen ausgeführt. Entsprechend wird der Prozessablauf im Folgenden auch als Garprozess bezeichnet. Gemäß einem Ausführungsbeispiel ist ein Nutzer der 205, 210, 215, 220 in den Prozessablauf zur Speisenherstellung integriert, beispielsweise, indem er Lebensmittel für den Garprozess vorbereitet oder zu garende Lebensmittel den Haushaltseinrichtungen 205, 210, 215, 220 zuführt.

Die Haushaltseinrichtungen 205, 210, 215, 220 führen zum Zubereiten der Speisen Prozesse mit Prozessschritten oder Prozessteilschritten aus. Gemäß Ausführungsbeispielen weisen alle oder einige der Haushaltseinrichtungen 205, 210, 215, 220 Automatikprogramme zum Garen der Lebensmittel auf. Ein in den Garprozess einbezogener Nutzer- hier ein Koch - führt ebenfalls einen oder mehrere Prozesse mit Prozessschritten oder Prozessteilschritten aus.

In der Datenbank 235 sind gemäß Ausführungsbeispielen Rezepte mit Kochanleitungen zum Zubereiten verschiedener Speisen hinterlegt. Die Rezepte können für eine Anwendung durch den Nutzer und/oder Automatikprogramme der Haushaltseinrichtungen 205, 210, 215, 220 ausgelegt sein. Die Rezepte können insbesondere Zeitinformationen über eine optimale Dauer eines Garprozesses oder einzelner Schritte oder Teilschritte eines Garprozesses enthalten. In der der Datenbank 235 sind ideale Prozessparameter hinterlegt, die für ein optimales Gelingen der zuzubereitenden Speisen den Rezepten zugrunde gelegt sind. Die über die Datenbank 235 bereitstellbaren Parameter bilden somit die Basis für die Gerätesteuerung und die Assistenz des Nutzers.

Die Vorrichtung 200 ist ausgebildet, um die für einen Garprozess auszuführenden einzelnen Prozesse und Prozessschritte zu "orchestrieren", d. h., so zwischen den Haushaltseinrichtungen 205, 210, 215, 220 bzw. zwischen den Haushaltseinrichtungen 205, 210, 215, 220 und dem Nutzer zu koordinieren, dass alle Einzelprozesse des Garprozesses zum optimalen Zeitpunkt beginnen bzw. enden. Die Vorrichtung 200 umfasst dazu eine Einleseeinrichtung, eine Durchführeinrichtung und eine Bereitstellungseinrichtung.

Über die Einleseeinrichtung werden ideale Prozessparameter aus der Datenbank 235 eingelesen und reale Prozessparameter über Schnittstellen mit den optischen Sensoren 225, 230 und den Haushaltseinrichtungen 205, 210, 215, 220 eingelesen. In der Durchführeinrichtung werden unter Verwendung geeigneter Algorithmen Vergleiche der idealen Prozessparameter mit den realen Prozessparametern ausgeführt. Unter Verwendung von Ergebnissen der in der Durchführeinrichtung ausgeführten Vergleichsoperationen werden gegebenenfalls Änderungsparameter zum Ändern von idealen Prozessparametern in geänderte Prozessparameter an die Haushaltseinrichtungen 205, 210, 215, 220 bereitgestellt.

Es wird so eine auf den Vergleichsoperationen basierende Regulierung einzelner Prozesse des Prozessablaufs erzielt. Beispielsweise bewirken die Änderungsparameter eine Verlängerung oder Verkürzung einzelner Garprozesse in Abhängigkeit von in der Durchführeinrichtung festgestellten Abweichungen der realen Prozessparameter von den idealen Prozessparametern.

Gemäß einem Ausführungsbeispiel ist die Einleseeinrichtung ausgebildet, um über eine Schnittstelle mit der Datenbank 235 einen idealen ersten Prozessparameter 245 einzulesen. Der ideale erste Prozessparameter 245 definiert hier einen ersten Prozessteilschritt eines im Prozessablauflauf durchzuführenden ersten Prozesses. Der erste Prozess kann von einer der Haushaltseinrichtungen 205, 210, 215, 220 oder dem Nutzer auszuführen sein. Bei dem in Figur 2 gezeigten Ausführungsbeispiel ist der erste Prozess von dem Nutzer auszuführen. Der ideale erste Prozessparameter 245 definiert eine optimale Ausführung eines Prozessteilschrittes des ersten Prozesses durch den Nutzer.

Die Einleseeinrichtung ist ferner ausgebildet, um über eine geeignete Schnittstelle ein erstes optisches Signal 250 des ersten optischen Sensors 225 einzulesen und ein zweites optisches Signal 255 des zweiten optischen Sensors 230 einzulesen. Bei dem in Figur 2 gezeigten Ausführungsbeispiel sind die optischen Sensoren 225, 230 einer Kamera zur Erfassung von Handlungen des Nutzers bzw. Kochs in Bezug zu dem Garprozess zugeordnet. Beispielsweise liefert das erste optische Signal 250 eine aktuelle Tiefenbildinformation bezüglich des Nutzers und das zweite optische Signal 255 eine Information über eine aktuelle Distanz des Nutzers zu einem an dem Garprozess beteiligten Haushalts- bzw. Küchengerät.

Die optischen Signale 250, 255 repräsentieren einen realen ersten Prozessparameter, der in der Durchführeinrichtung der Vorrichtung 200 mit dem oben erwähnten idealen ersten Prozessparameter 245 verglichen wird. Der reale erste Prozessparameter repräsentiert Zustände bzw. Handlungen des Nutzers, die dieser tatsächlich in dem Prozessteilschritt des ersten Prozesses ausführt. Mit dem Vergleich von idealem ersten Prozessparameter 245 und realem ersten Prozessparameter in der Durchführeinrichtung wird beispielsweise festgestellt, ob der Nutzer mit seinen Aufgaben im Garprozess zurückliegt und davon abhänge Prozesse der Haushaltseinrichtungen 205, 210, 215, 220 eventuell zeitlich anzupassen sind.

Die Einleseeinrichtung ist weiterhin ausgebildet, um Informationen über weitere Prozesse des Garprozesses einzulesen. Über eine weitere geeignete Schnittstelle wird eine erste Information 260 des Kochfeldes 205, eine zweite Information 265 des Backofens 210, eine dritte Information 270 des Dampfgarers 215 und einer vierte Information 275 des Mikrowellenherdes 220 eingelesen. Die Informationen 260, 265, 270, 275 repräsentieren reale Prozessparameter 260, 265, 270, 275 von von den Haushaltseinrichtungen 205, 210, 215, 220 ausgeführten weiteren Prozessen. Die realen Prozessparameter 260, 265, 270, 275 werden in der Durchführeinrichtung mit entsprechenden idealen Prozessparametern der Haushaltseinrichtungen 205, 210, 215, 220 vergleichen.

Bei dem in Figur 2 gezeigten Ausführungsbeispiel beschreibt der reale Prozessparameter 260 einen Betriebszustand des Kochfeldes, also beispielsweise, ob ein Bereich des Kochfeldes eingeschaltet ist oder welche Stufe des Kochfeldbereichs eingestellt ist. Der reale Prozessparameter 265 beschreibt einen Betriebszustand des Backofens 210, beispielsweise, ob ein Türkontakt des Backofens geschlossen ist.

In Abhängigkeit von Ergebnissen der in der Durchführeinrichtung ausgeführten Vergleiche der realen Prozessparameter 250, 255, 260, 265, 270, 275 mit den jeweiligen idealen Prozessparametern stellt gemäß Ausführungsbeispielen die Bereitstellungseinrichtung der Vorrichtung 200 über eine geeignete Schnittstelle einen ersten Änderungsparameter 280 an das Kochfeld 205 bereit und/oder einen zweiten Änderungsparameter 285 an den Backofen 210 bereit und/oder einen dritten Änderungsparameter 290 an den Dampfgarer 215 bereit und/oder einen vierten Änderungsparameter 295 an den Mikrowellenherd 220 bereit. Die Änderungsparameter 280, 285, 290, 295 bewirken eine Änderung der jeweiligen idealen Prozessparameter und damit eine Änderung im Ablauf der jeweiligen Prozesse.

Bei dem in Figur 2 gezeigten Ausführungsbeispiel gibt die Vorrichtung 200 in Abhängigkeit von den aufgrund der Änderungsparameter 280, 285, 290, 295 geänderten Prozessen über eine weitere geeignete Schnittstelle eine Mitteilung 297 über eine Qualität eines zu erwartenden Ergebnisses des Prozessablaufs an die Datenverarbeitungseinrichtung 240 - hier ein dem Nutzer zugeordneter Tablet-Computer 240 - bereit. Gemäß einem Ausführungsbeispiel kann auch der Nutzer über eine Eingabe an der Datenverarbeitungseinrichtung 240 einen Steuerbefehl 298 an die Vorrichtung 200 bereitstellen.

Gemäß einem weiteren Ausführungsbeispiel wird über die Schnittstelle eine von dem Ergebnis der Vergleichsoperationen in der Durchführeinrichtung abhängige Anweisung an die Datenverarbeitungseinrichtung 240 bereitgestellt. Die Anweisung instruiert den Nutzer beispielsweise, den von ihm ausgeführten Prozess bzw. einen Prozessteilschritt des von ihm ausgeführten Prozesses schneller oder langsamer auszuführen, um eine verloren gegangene Übereinstimmung des realen ersten Prozessparameters mit dem idealen ersten Prozessparameter wiederherzustellen.

Gemäß dem hier vorgestellten Konzept wird der Zubereitungsprozess bzw. Garprozess unter Verwendung der Haushaltseinrichtungen 205, 210, 215, 220 nicht mehr nur über abstrakte Geräteparameter und manuell koordinierte Handlungsschritte definiert, sondern über eine, den Kochprozess begleitende, nutzerzentrierte Assistenz im Zubereitungsprozess, die über die Vorrichtung 200 und ggf. ein einzelnes, zentrales Interface 240 gesteuert wird.

Über die Erfassung der aktuellen Prozessparameter und Sensorendaten 250, 255, 280, 285, 290, 295 innerhalb der Kochgeräte - z. B. Temperatur, Türkontakt etc. - und außerhalb der Kochgeräte - z. B. Lokalisierung und Identifizierung des Nutzers - sowie der Interaktion des Nutzers mit dem zentralen User-Interface 240 werden Prozessteilschritte erfasst und kontinuierlich vom System mit dem Idealprozess verglichen, um bei eventuellen Abweichungen einzelne Prozessschritte zu beschleunigen oder zu verzögern. Die erfassten Teilschritte und Prozessmerkmale werden mit der - in gewissen Grenzen - toleranten Kochanleitung abgeglichen. Der Abgleich erlaubt es, den Nutzer auf Handlungen hinzuweisen, die für ein qualitativ ansprechendes Kochergebnis notwendig sind.

Die Garprozesse der Küchengeräte bzw. Haushaltseinrichtungen 205, 210, 215, 220 werden über flexible Automatikprogramme gesteuert, die es erlauben, einen einzelnen Garprozess zu verkürzen oder zu verlängern, ohne die Qualität des Garguts maßgeblich zu gefährden. Ablenkungen oder eine schlechte Organisation des Kochs können so durch die Orchestrierung der am Kochprozess beteiligten Kochgeräte 205, 210, 215, 220 kompensiert werden. Die Auswirkungen der Abweichungen auf die Qualität des Essens können dem Benutzer über die Datenverarbeitungseinrichtung 204 angezeigt werden. Beispielsweise repräsentiert ein Anzeigetext "sehr gut", dass keine Abweichung vom Idealprozess vorliegt, ein Anzeigetext "gut", dass eine geringe Abweichung vom Idealprozess vorliegt und ein Anzeigetext "befriedigend", dass eine große Abweichung vom Idealprozess vorliegt.

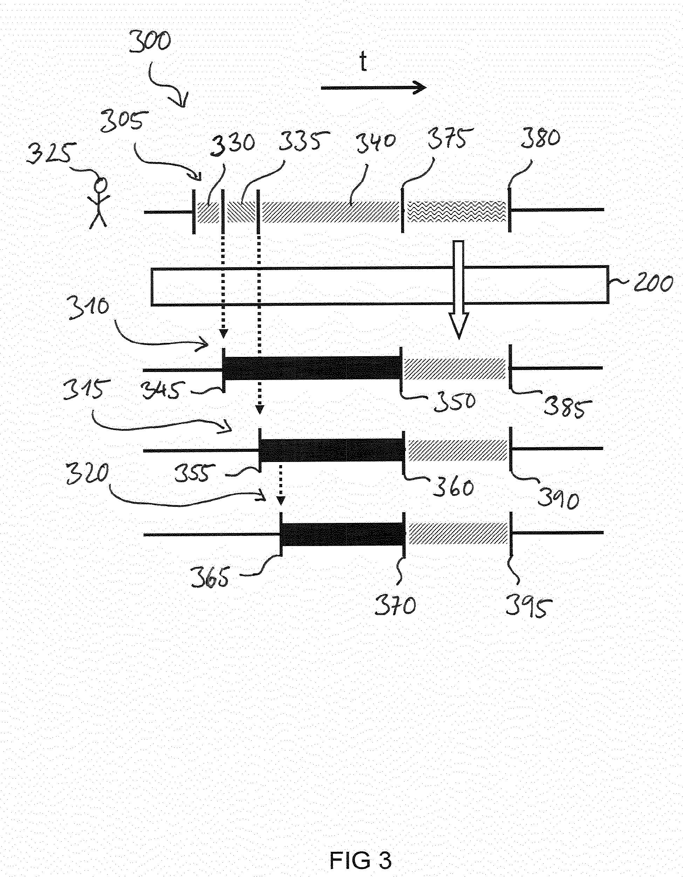

Figur 3 zeigt ein Zeitdiagramm eines beispielhaften Prozessablaufs 300. Der Prozessablauf 300 repräsentiert hier einen Speisenzubereitungsprozess 300 zur zeitlich koordinierten Herstellung mehrerer Speisen, der unter Verwendung des in Figur 2 gezeigten Haushaltsnetzwerks ausgeführt wird.

Der Prozessablauf 300 umfasst einen ersten Prozess 305, einen zweiten Prozess 310, einen dritten Prozess 315 und einen vierten Prozess 320. Die Prozesse 305, 310, 315, 320 werden von der Vorrichtung 200 im Sinne einer Systemkoordination geregelt und sind in Figur 3 mittels Zeitsträngen repräsentiert.

Der erste Prozess 305 ist von einem Nutzer bzw. Koch 325 auszuführen und umfasst einen ersten Prozessteilschritt 330, einen zweiten Prozessteilschritt 335 und einen dritten Prozessteilschritt 340. Die Prozessteilschritte 330, 335, 340 repräsentieren vom Nutzer 325 zu erledigende Aufgaben und werden auch als "Tasks" 330, 335, 340 bezeichnet. Die Prozessteilschritte 330, 335, 340 sind nacheinander auszuführen und unterschiedlich lang. Die Prozessteilschritte 330, 335, 340 sind durch jeweilige vordefinierte Start- bzw. Endzeitpunkte gekennzeichnet.

Bei dem zweiten Prozess 310 handelt es sich bei dem in Figur 3 gezeigten Beispiel um einen unter Verwendung einer ersten Ressource, hier eines Kochfelds, auszuführenden ersten Garprozess 310. Der erste Garprozess 310 ist durch einen vordefinierten Startzeitpunkt 345 und einen vordefinierten bzw. geplanten Endzeitpunkt 350 gekennzeichnet.

Bei dem dritten Prozess 315 handelt es sich bei dem in Figur 3 gezeigten Beispiel um einen unter Verwendung einer zweiten Ressource, hier eines Backofens, auszuführenden zweiten Garprozess 315. Der zweite Garprozess 315 ist durch einen vordefinierten Startzeitpunkt 355 und einen vordefinierten bzw. geplanten Endzeitpunkt 360 gekennzeichnet.

Bei dem vierten Prozess 320 handelt es sich bei dem in Figur 3 gezeigten Beispiel um einen unter Verwendung einer dritten Ressource, hier eines Dampfgarers, auszuführenden dritten Garprozess 320. Der dritte Garprozess 320 ist durch einen vordefinierten Startzeitpunkt 365 und einen vordefinierten bzw. geplanten Endzeitpunkt 370 gekennzeichnet.

Die Vorrichtung 200 ist ausgebildet, um die Prozesse 305, 310, 315, 320 zu koordinieren. Wie die Darstellung in Figur 3 zeigt, fällt der Startzeitpunkt 345 des zweiten Prozesses 310 auf einen Startzeitpunkt des zweiten Prozessteilschrittes 335 des ersten Prozesses 305, und der Startzeitpunkt 355 des dritten Prozesses 315 fällt auf einen Startzeitpunkt des dritten Prozessteilschrittes 340 des ersten Prozesses 305. Der Startzeitpunkt 365 des vierten Prozesses 320 ist abhängig von einem bestimmten Zeitpunkt während des dritten Prozesses 315.

Bei dem in Figur 3 gezeigten beispielhaften Prozessablauf 300 verzögert sich die Ausführung des dritten Prozessteilschritts 340 durch den Nutzer um einen Zeitraum Δt. Ein vordefinierter Endzeitpunkt bzw. ein Soll-Ende 375 des dritten Prozessteilschritts 340 wird überschritten und der dritte Prozessteilschritt 340 erst zu einem späteren Zeitpunkt, einem Ist-Ende 380, abgeschlossen.

Die Vorrichtung 200 ist ausgebildet, um die Prozesse 305, 310, 315, 320 zu koordinieren und greift dazu, wie im Zusammenhang mit Figur 2 beschrieben, auf Sensordaten über Zustände des Nutzers 325 und/oder der Ressourcen zu. So verfügt die Vorrichtung 200 bei dem in Figur 3 gezeigten beispielhaften Prozessablauf 300 über Sensordaten zur Kochgeschwindigkeit des Nutzers 325. Diese Sensordaten werden beispielsweise von einer auf den Nutzer 325 gerichteten Kamera bereitgestellt. Gemäß dem hier vorgestellten Konzept erkennt die Vorrichtung 200 aufgrund des durchgeführten Vergleichs von idealen und realen Prozessparametern, dass der Nutzer 325 den dritten Prozessteilschritt 340 nicht zum geeigneten Zeitpunkt 375 abgeschlossen hat und registriert den tatsächlichen, realen Endzeitpunkt 380.

Die Vorrichtung 200 koordiniert bzw. reguliert nun die von den Prozessteilschritten 330, 335, 340 abhängigen Garprozesse 310, 315, 320 durch die Bereitstellung von Änderungsparametern an die am Prozessablauf 300 beteiligten Haushaltseinrichtungen. Basierend auf den Änderungsparametern werden die Garprozesse 310, 315, 320 modifiziert bzw. geändert; hier, indem die jeweiligen Gargeschwindigkeiten der Garprozesse 310, 315, 320 reduziert werden, um die Garprozesse 310, 315, 320 zu verlängern und an den verlängerten ersten Prozess 305 anzupassen. Entsprechend wird im ersten Garprozess 310 ein geänderter - späterer - Endzeitpunkt 385 gesetzt, im zweiten Garprozess 315 ein geänderter - späterer - Endzeitpunkt 390 gesetzt und im dritten Garprozess 320 ein geänderter - späterer - Endzeitpunkt 395 gesetzt.

Gemäß dem hier vorgestellten Konzept wird bei Automatikprogrammen von an einem Garprozess beteiligten Küchengeräten ein dynamischer Nutzungskontext erfasst und mit einbezogen. Die Küchengeräte werden so koordiniert, dass der Koch 325 zeitlich und organisatorisch angeleitet bzw. entlastet wird und die Automatikprogramme sich den jeweiligen Gegebenheiten im Rahmen einer vom System 200 kontinuierlich angepassten Pufferzeit anpassen.

Beispielsweise registriert das zugrunde liegende System 200, ob der Kochprozess einer Beilage A zum gleichen Zeitpunkt endet wie der Kochprozess von Beilage B. Die Garprozesse werden so - in den möglichen Grenzen - den realen Abläufen in der Küche angepasst und vom System geräteübergreifend koordiniert.

Zudem werden bei Abweichungen vom idealen Kochprozess kontext-sensitive Hilfestellungen gegeben, die den Nutzer 325 informieren, wenn die Ergebnisqualität gefährdet ist. Dadurch werden qualitativ hochwertige Kochergebnisse erzielt und zeitlich so abgestimmt, dass z. B. alle Teile eines Menüs gleichzeitig zum perfekten Garpunkt fertig sind - trotz Störeinflüssen oder nicht idealen Startzeiten der einzelnen Garprozesse.

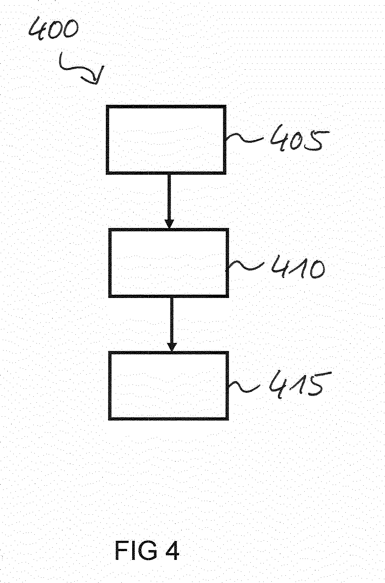

Figur 4 zeigt ein Ablaufdiagramm eines Ausführungsbeispiels eines Verfahrens 400 zum Unterstützen eines Prozessablaufs koordinierter Haushaltseinrichtungen. In einem Schritt des Einlesens 405 wird ein einem ersten Prozessteilschritt eines ersten Prozesses zugeordneter realer erster Prozessparameter eingelesen. In einem Schritt des Durchführens 410 wird ein Vergleich des realen ersten Prozessparameters mit dem idealen ersten Prozessparameter durchgeführt. In einem Schritt des Bereitstellens 415 wird ein Änderungsparameter bereitgestellt, um den idealen zweiten Prozessparameter unter Verwendung eines Ergebnisses des Vergleichs in einen zur weiteren Ausführung des zweiten Prozesses zu verwendenden geänderten zweiten Prozessparameter zu ändern.

Zusammenfassend basiert das hierin vorgeschlagene Konzept zur Koordination verteilter Automatikprogramme von Haushaltseinrichtungen und Handlungen eines Benutzers der Haushaltseinrichtungen auf dem Einsatz von Automatikprogrammen mit zeitlichen Toleranzen, der Ausführung von Prozessabläufen, z. B. Kochprozessen, die Anleitungen bzw. Hilfestellungen und mehrere Automatikprogramme zusammenfassen, dem Einsatz verteilter und vernetzter Sensorik in den Küchengeräten, der Koordination der Anleitungen und Automatikprogramme auf Basis der vernetzen Sensorik und der Verwendung eines zentralen Benutzerinterfaces zur Anleitung des agierenden, z. B. kochenden, Benutzers.

Vorteilhaft ist es dabei, die Automatikprogramme mit vertretbaren Toleranzen zu gestalten, was die Qualität des Endproduktes angeht, ferner, die Zubereitungsanleitungen mit mehreren Automatikprogrammen zu koordinieren, Benutzereingaben am zentralen Display zu ermöglichen, ggf. über Spracheingabe, und Sensordaten z. B. einer Kochfeld-Sensorik (Topferkennung, etc.) und von Näherungssensoren sowie Sensordaten über den Zustand eines Türkontaktschalters mit einzubeziehen, sowie eine zentrale, ggf. entfernte, Leistungssteuerung einzusetzen, evtl. kombiniert mit dem Powermanagement.

## Patentansprüche

1. Verfahren (400) zum Unterstützen eines Prozessablaufs (300) mit zumindest einem ersten Prozess (305) und einem unter Verwendung von zumindest einer Haushaltseinrichtung (205, 210, 215, 220) eines Haushaltsgeräts (105) ausführbaren zweiten Prozess (310), wobei der erste Prozess (305) zumindest einen über einen idealen ersten Prozessparameter (245) definierten ersten Prozessteilschritt aufweist und der zweite Prozess (310) über zumindest einen idealen zweiten Prozessparameter definiert ist, und wobei das Verfahren (400) die folgenden Schritte aufweist:
Einlesen (405) eines dem ersten Prozessteilschritt zugeordneten realen ersten Prozessparameters;
Durchführen (410) eines Vergleichs des realen ersten Prozessparameters mit dem idealen ersten Prozessparameter (245); und
Bereitstellen (415) eines Änderungsparameters (280, 285, 290, 295) zum Ändern des idealen zweiten Prozessparameters unter Verwendung eines Ergebnisses des Vergleichs in einen zur weiteren Ausführung des zweiten Prozesses (310) zu verwendenden geänderten zweiten Prozessparameter.

2. Verfahren (400) gemäß Anspruch 1, bei dem in dem Schritt des Einlesens (405) der den ersten Prozessteilschritt definierende ideale erste Prozessparameter (245) über eine Schnittstelle mit einer Datenbank (235), in der die die Prozesse (305, 310, 315, 320) des Prozessablaufs (300) definierenden idealen Prozessparameter hinterlegt sind, eingelesen wird.

3. Verfahren (400) gemäß einem der vorangegangenen Ansprüche, bei dem ansprechend auf den Schritt des Bereitstellens (415) der geänderte zweite Prozessparameter eine Beschleunigung oder eine Verlangsamung des zweiten Prozesses (310) bewirkt, um ein zeitliches Ende (350) des zweiten Prozesses (310) an ein in Abhängigkeit von dem realen ersten Prozessparameter verändertes zeitliches Ende (380) des ersten Prozessteilschritts anzupassen.

4. Verfahren (400) gemäß einem der vorangegangenen Ansprüche, bei dem der erste Prozess (305) einen von einem Nutzer (325) der Haushaltseinrichtung (205, 210, 215, 220) ausgeführten Prozess repräsentiert.

5. Verfahren (400) gemäß Anspruch 4, mit einem Schritt des Bestimmens des realen ersten Prozessparameters mittels eines optischen Sensors (225, 230) zur Erfassung eines Zustands des Nutzers (325) der Haushaltseinrichtung (205, 210, 215, 220).

6. Verfahren (400) gemäß einem der Ansprüche 1 bis 3, bei dem der erste Prozess (305) von einer weiteren Haushaltseinrichtung (205, 210, 215, 220) ausgeführt wird.

7. Verfahren (400) gemäß Anspruch 6, mit einem Schritt des Bestimmens des realen ersten Prozessparameters mittels eines Sensors zur Erfassung eines Zustands der Haushaltseinrichtung (205, 210, 215, 220).

8. Verfahren (400) gemäß einem der vorangegangenen Ansprüche, mit einem Schritt des Bereitstellens einer von dem geänderten zweiten Prozessparameter abhängigen Mitteilung (297) über eine Qualität eines Ergebnisses des Prozessablaufs (300) an eine Schnittstelle mit einer einem Nutzer (325) der Haushaltseinrichtung (205, 210, 215, 220) zugeordneten oder zuordenbaren Datenverarbeitungseinrichtung (240).

9. Verfahren (400) gemäß einem der vorangegangenen Ansprüche, mit einem Schritt des Bereitstellens einer von dem Ergebnis des Vergleichs abhängigen Anweisung über eine Beschleunigung oder Verlangsamung des ersten Prozessteilschrittes, um eine Wiederherstellung der Übereinstimmung des idealen ersten Prozessparameters (245) mit dem realen ersten Prozessparameter zu erzielen, wobei die Anweisung an eine Schnittstelle mit einer einem Nutzer (325) der Haushaltseinrichtung (205, 210, 215, 220)en zugeordneten oder zuordenbaren Datenverarbeitungseinrichtung (240) bereitgestellt wird.

10. Verfahren (400) gemäß einem der vorangegangenen Ansprüche, mit einem Schritt des Durchführens eines weiteren Vergleichs des realen ersten Prozessparameters mit einem idealen dritten Prozessparameter, der einen dritten Prozess (315) des Prozessablaufs (300) definiert, und einem Schritt des Bereitstellens eines weiteren Änderungsparameters (280, 285, 290, 295) zum Ändern des idealen dritten Prozessparameters unter Verwendung eines Ergebnisses des weiteren Vergleichs in einen zur weiteren Ausführung des dritten Prozesses (315) zu verwendenden geänderten dritten Prozessparameter.

11. Vorrichtung (200) zum Unterstützen eines Prozessablaufs (300) mit zumindest einem ersten Prozess (305) und einem unter Verwendung von zumindest einer Haushaltseinrichtung (205, 210, 215, 220) eines Haushaltsgeräts (105) ausführbaren zweiten Prozess (310), wobei der erste Prozess (305) zumindest einen über einen idealen ersten Prozessparameter (245) definierten ersten Prozessteilschritt aufweist und der zweite Prozess (310) über zumindest einen idealen zweiten Prozessparameter definiert ist, und wobei die Vorrichtung (200) die folgenden Merkmale aufweist:
eine Einleseeinrichtung zum Einlesen eines dem ersten Prozessteilschritt zugeordneten realen ersten Prozessparameters;
eine Durchführeinrichtung zum Durchführen eines Vergleichs des realen ersten Prozessparameters mit dem idealen ersten Prozessparameter (245); und
eine Bereitstellungseinrichtung zum Bereitstellen eines Änderungsparameters (280, 285, 290, 295) zum Ändern des idealen zweiten Prozessparameters unter Verwendung eines Ergebnisses des Vergleichs in einen zur weiteren Ausführung des zweiten Prozesses (310) zu verwendenden geänderten zweiten Prozessparameter.

12. Haushaltsgerät (105) mit folgenden Merkmalen:
einer Vorrichtung (200) gemäß Anspruch 11; und
zumindest einer Haushaltseinrichtung (205, 210, 215, 220), die mit der Vorrichtung (200) für eine Datenübertragung gekoppelt oder koppelbar ist, wobei die Haushaltseinrichtung (205, 210, 215, 220) für eine Zubereitung von Speisen ausgelegt ist.

13. Computerprogramm, das dazu eingerichtet ist, das Verfahren (400) gemäß einem der Ansprüche 1 bis 10 auszuführen.

14. Maschinenlesbares Speichermedium, auf dem das Computerprogramm nach Anspruch 13 gespeichert ist.
